Europäisches Patentamt

European Patent Office

Office européen des brevets

(11) Publication number: **0 074 857**
**B1**

# EUROPEAN PATENT SPECIFICATION

(45) Date of publication of patent specification: **20.08.86**

(51) Int. Cl.⁴: **F 16 D 57/04**

(21) Application number: **82304866.5**

(22) Date of filing: **15.09.82**

(54) **Hydrodynamic retarders.**

(30) Priority: **15.09.81 GB 8127790**

(43) Date of publication of application:
**23.03.83 Bulletin 83/12**

(45) Publication of the grant of the patent:
**20.08.86 Bulletin 86/34**

(84) Designated Contracting States:
**DE GB SE**

(56) References cited:
**DE-A-1 480 332**
**DE-A-1 600 187**
**DE-A-1 675 128**
**DE-A-1 675 248**
**DE-A-1 938 092**
**US-A-2 658 346**

(73) Proprietor: **A.B. Volvo**
**P.O. Box 382**
**S-405 09 Goteborg (SE)**

(72) Inventor: **Miller, Albert Arthur**
**Caddon Lodge 4 Whytbank Row**
**Clovenfords Galashiels, TD1 3NE (GB)**

(74) Representative: **Valentine, Francis Anthony**
**Brinsley et al**
**REDDIE & GROSE 16 Theobalds Road**
**London WC1X 8PL (GB)**

Courier Press, Leamington Spa, England.

## Description

The present invention relates to hydrodynamic retarders for absorbing and dissipating power from a rotating member, for example a transmission shaft of a vehicle, thereby supplementing the normal braking system of the vehicle to prevent overheating of the braking system especially when descending a long incline. The invention is concerned with such hydrodynamic retarders (as shown in DE—OS 1 938 092) which comprise at least two vaned elements together defining a toroidal working circuit, one of the elements being fixed against rotation, while another element or the other element is secured for rotation with the rotary member to be retarded, the retarder including means for selectively supplying liquid to the working circuit and emptying the working circuit of liquid and in which a portion of the working surface wall is formed by a surface which is movable between a first position in which it forms part of the working circuit wall and a second position in which it diverts substantially all fluid flow within the working circuit along a path which takes the fluid flow effectively out of contact with the vanes of one of the elements. Normally, the liquid supply means will ensure simultaneous supply of liquid to the working circuit and removal of some liquid from the working circuit for the removal of heat generated by dissipation of the power, the rates of supply and removal being equal when the degree of filling of the working circuit is constant.

A problem arises, however, with hydrodynamic retarders during normal running, i.e. when the retarder is required to be out of action. Although the liquid supply will then be cut off, the said other element of the retarder will still be rotationally driven and the air within the working circuit, together with any residual working liquid possibly in the form of foam will form a toroidal vortex and thereby generate an unwanted drag torque resulting in waste of fuel.

It has already been proposed in the above-mentioned DE—OS 1 938 092 to try to overcome this problem by providing the movable surface in the form of a set of resiliently flexible strips which are each deflected to lie against the wall of an intervane pocket when the retarder is filled to retard the vehicle and which, when the working circuit is empty, return to a position in which they divert liquid to-an outlet at the periphery of the working circuit. Such strips cannot however provide a complete barrier to circulation of residual liquid in the working circuit.

It has also been proposed in DE—OS 1 675 248 to try to overcome the problem by providing a piston-like member in each inter-vane pocket of the stationary element and arranging that each such piston-like member is axially movable between a withdrawn position when the retarder is filled and in use and an extended position substantially flush with the front face of the stationary element when the retarder is out of use, thereby to prevent flow into the inter-vane pockets of the stationary retarder element.

This arrangement is however cumbersome and expensive in that an actuating rod is required for each intervane pocket of the stationary element and the part of the working circuit formed in that stationary element has to be rectangular as seen in axial section, thereby compromising the performance of the retarder.

According to the present invention, a hydrodynamic retarder is characterised in that the fluid-deflecting surface is annular, undivided and axially movable and is radially separate from the vanes of the associated element and the retarder includes means for moving the annular surface axially between the first and second positions.

Other advantageous features which may be employed are set out in claims 2 to 5.

An embodiment of the invention will now be described by way of example with reference to the accompanying drawings, in which:—

Fig. 1 shows the upper half of an axial section through a hydrodynamic retarder, in its operative state, installed in the transmission of a road vehicle;

Fig. 2 shows portions of Fig. 1 as seen in axial section taken at a different angular portion to that of Fig. 1;

Fig. 3 is a view corresponding to Fig. 1 but showing the retarder in its inoperative position;

Fig. 4 shows a portion of a cross-section on the line IV—IV of Fig. 3; and

Fig. 5 shows a section on the line V—V of Fig. 4.

The retarder shown in the drawings comprises a stator 1 which is permanently secured, for example by bolts (not shown) to a wall of the transmission housing 2 of the road vehicle. The stator 1 has formed in it an annular cavity (to form part of the toroidal working circuit of the retarder) and carriers a set of fixed radial vanes 3 spaced around the axis 30 of the retarder.

The rotor 4 of the retarder is formed with a further annular cavity facing the stator 1 and carrying a set of rotor vanes 5 in its cavity spaced around the axis 30. The rotor 4 is enclosed within a cylindrical extension wall 6 of the stator 1 and an end wall 7 bolted to the wall 6. An inward extension of the rotor forms a hub 8 carrying splines 9 by means of which the rotor 4 can be coupled to and supported by the rotary member of the transmission which is to be retarded.

The stator 1 is formed with inlet and outlet passages at convenient points around the working circuit for supplying working liquid (usually lubricating oil) to the working circuit when the retarder is in operation and for removing working liquid for cooling before return to the working circuit or for emptying the working circuit, as required. One such passage is indicated at 10 and communicates with the working circuit at selected points, such as 10a.

Seals between the radially innermost portions of the stator 1 and its end wall 7 and the rotor 4 are formed by flanged seal rings 11 which are axially slidable on pins 12 in the stator structure and are pressed into sliding sealing contact with co-operating plane surfaces on each side of the rotor by wavy springs 13, the pins 12 being engaged in holes or slots in the radial flanges of the rings 11. The axially extending flanges of the rings 11 carry sealing rings 14 engages in annular grooves in the stator hub and the end wall 7.

The wavy springs 13 need only exert light pressure on the ring seals 11 since 11 since if the working liquid within the retarder reaches a significant pressure when the retarder is in use, this pressure will act within the space between the radial flange of each seal 11 and the adjacent wall surface of the stator 1 or end wall 7, correspondingly augmenting the force exerted by the wavy springs, at the same time forcing the sealing rings 14 against the outer side walls of their grooves.

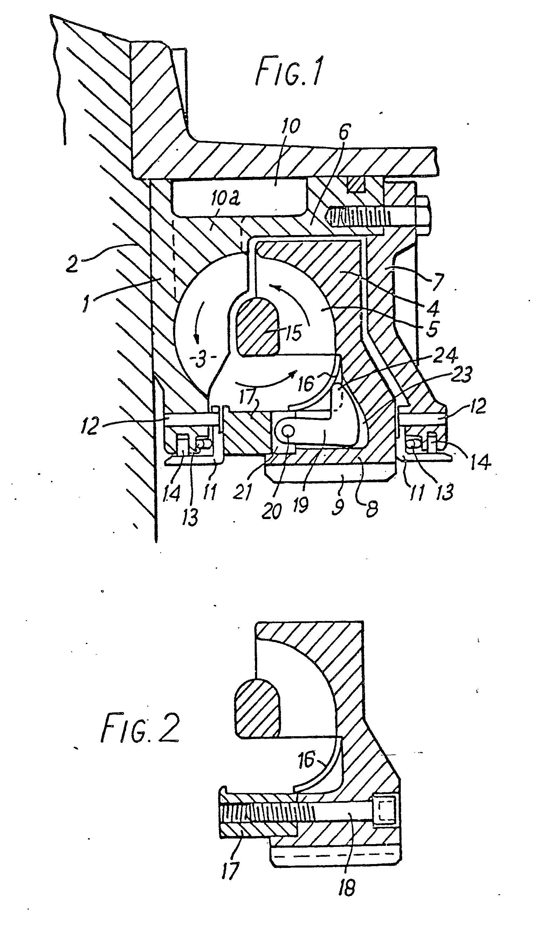

The working circuit of the retarder may include a conventional core-ring 15 which can be cast integrally with the rotor vanes or otherwise secured to them. The radially inner surface of the core-ring 15 and the radially inner edges of the rotor vanes 5 lie on the same cylindrical surface. Radially inwardly of this surface, the toroidal wall surface of the working circuit, inwardly to approximately the inner profile diameter, is defined by an annular shutter 16 which is axially slidable on the exterior of a guide ring 17 secured to the rotor 4 by a ring of recessed bolts 18 (Fig. 2).

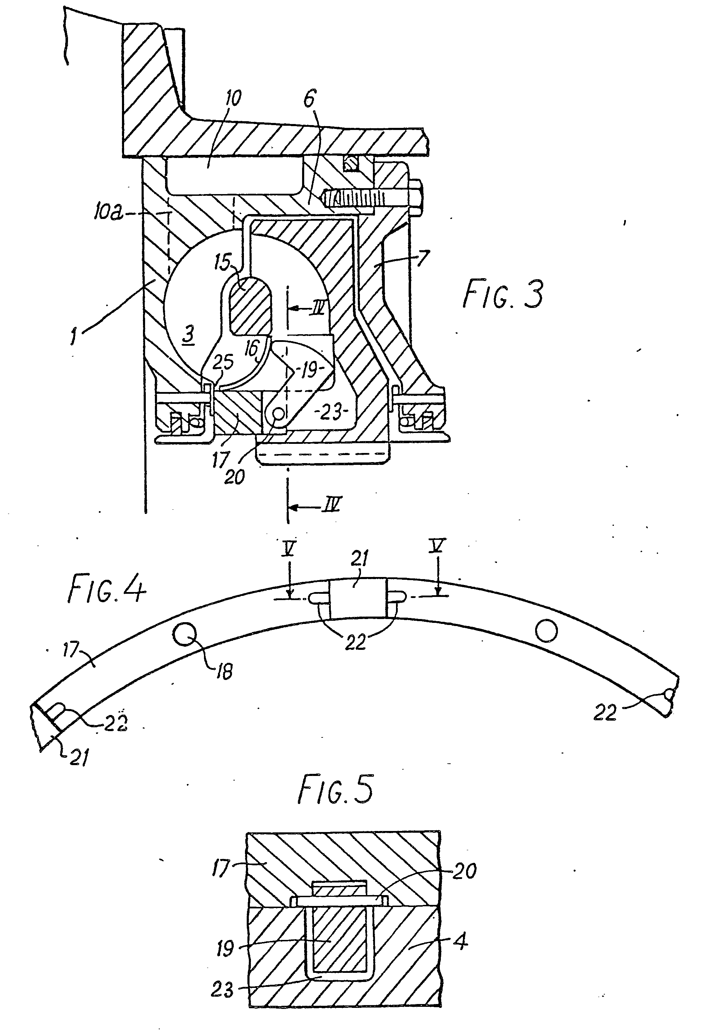

A set of weighted levers 19 of L-shape have the ends of their longer limbs pivotally mounted on fulcrum pins 20 extending across radial slots 21 in the guide ring 17 and having their ends engaged in recesses 22 (Fig. 4) in the guide ring, the remainder of each lever 19 being accommodated in pockets 23 (Figs. 1 and 3) in the rotor 4. The tips of the shorter free limbs of the levers 19 form rounded noses 24 which engage the convex exterior of the shutter 16.

In operation, with no liquid supplied to the working circuit, when the rotary member carrying the rotor 4 rotates, the centrifugal force acting on the levers 19 will cause them to swing outwards from the position shown in Fig. 1 to that shown in Fig. 3. In this position, the shutter 16 has its radially outer circumference adjacent the core-ring 15 and its radially inner circumference against a small stop flange 25 on the guide ring 17. The shutter 16 thus extends completely across the normal vortex flow path within the working circuit around the core-ring 15.

When the retarder is required to be brought into operation, liquid is introduced into the working circuit through passages such as 10 and 10a. A small quantity of this liquid will initially leak through the clearance space between the shutter 16 and the rotor vanes 5 and this will initiate sufficent flow velocity through the stator cavities between the vanes 3 to impinge on the shutter 16 and move the latter axially to the right as a result of the increased density of the fluid within the working circuit, despite the centrifugal opposition of the weighted arms 19. The shutter 16 thus moves from the position shown in Fig. 3 to that shown in Figs. 1 and 2 where it forms part of the outer boundary of the toroidal working circuit, in conjunction with the stator 1, the rotor 4 and the outer surface of the guide ring 17.

Since the pressure which impels the liquid around the working circuit is proportional to the square of the angular velocity of the rotor and since the centrigual force which the levers 19 exert on the shutter 16 is also proportional to the square of the angular velocity, a constant relationship exists between these opposing influences on the shutter and accordingly the position adopted by the shutter 16 will be determined by the effective density of fluid contained within the working circuit and will be independent of the operating speed of the rotary member.

When the retarder is out of use and the working liquid drained off, the air which replaces the liquid tends to circulate around the toroidal circuit, but because of its relatively lower density the current of air impinging on teh shutter is unable to resist the centrifugal force from the levers 19 which now swing outwards to displace the shutter into the position shown in Fig. 3 where is deflects the current of air from entering the rotor cavities and so further reduces the pumping load imposed on the rotor when the retarder is out of use.

The weighted levers 19 are designed to have their centers of gravity so disposed in relation to their fulcrum centres that the force which they impart to the axial movement of the shutter under the influence of centrifugal force at a given rotational speed diminished slightly as such movement proceeds. In this way the levers tend to move in unison and the shutter remains substantially in the same alignement throughout its axial travel. A futher advantage of this characteristic is that relatively less force is required to commence the return movement of the shutter than is required to complete it, with the result that a smaller initial flow of liquid through the rotor will initiate the displacement of the shutter when the retarder is brought into use.

**Claims**

1. A hydrodynamic retarder comprising at least two vaned elements (1, 4) together defining a toroidal working circuit, one of the elements (1) being fixed against rotation, while another element or the other element (4) is secured for rotation with the rotary member to be retarded, the retarder including means for selectively supplying liquid to the working circuit and emptying the working circuit of liquid, and in which a portion of the working circuit wall is formed by a movable surface (16) between a first position in which it forms part of the working circuit wall and a second position in which it diverts substantially all fluid flow within the working circuit along a path which takes the fluid flow effectively out of contact with the vanes (5) of one of the elements characterised in that the surface (16) is annular undivided and axially movable and is radially separate from the vanes (5) of the associated element and the retarder includes means (19) for moving the annular surface axially between the first and second positions.

2. A retarder according to claim 1, characterised in that the annula surface (16) is radially inwards of the said vanes (5) of the associated element.

3. A retarder according to claim 1 or 2, the retarder including a core ring (15), characterised in that the annular surface is formed by an annular shutter (16) extending inwardly from the core ring (15) to the inner profile diameter (17) of the working circuit in the said second position of the shutter.

4. A retarder according to any of claims 1 to 3, characterised in that the means for moving the annular surface (16) to its second position operate as a result of centrifugal force acting on one or more masses and the annular surface is movable to its first position against the effect of the said centrifugal force or forces by liquid within the working circuit when such liquid is present in sufficient quantity to activate the retarder with the surface in its first position.

5. A retarder according to claim 4, characterised in that the masses are formed by weighted levers (19), movement of which to carry their massive parts outwards away from the axis of the retarder acts on the annular suface (16) to move it axially.

**Patentansprüche**

1. Hydrodynamischer Retarder, enthaltend wenigstens zwei mit Schaufeln versehene Elemente (1, 4), die zusammen einen toroidalen Arbeitskreis bilden, wobei eines der Elemente (1) gegen Rotation fixiert ist, während ein anderes oder das andere Element (4) an dem drehbaren, zu verzögernden Bauteil zum Mitdrehen befestigt ist, und enthaltend Mittel zur wahlweisen Zuführung von Flüssigkeit zum Arbeitskreis und zum Leeren des Arbeitskreises von Flüssigkeit, wobei ein Teil der Arbeitskreiswand durch eine Fläche (16) gebildet ist, die zwischen einer ersten Stellung, in der sie einen Teil der Arbeitskreiswand bildet, und einer zweiten Stellung bewegbar ist, in der sie im wesentlichen die gesamte Strömung im Arbeitskreis längs einer Bahn ablenkt, die die Strömung wirksam außer Kontakt mit den Schaufeln (5) eines der Elemente hält, dadurch gekennziechnet, daß die Fläche (16) ringförmig, ungeteilt, axial bewegbar und radial von den Schaufeln (5) des zugeordneten Elements getrennt ist und der Retarder Mittel (19) zur Axialverschiebung der ringförmigen Fläche zwischen der ersten und zweiten Stellung aufweist.

2. Retarder nach Anspruch 1, dadurch gekennzeichnet, daß die ringförmige Fläche (16) radial innerhalb der Schaufeln (5) des zugeordneten Elements ist.

3. Retarder nach Anspruch 1 oder 2, wobei der Retarder einen Kernring (15) enthält, dadurch gekennzeichnet, daß die ringförmige Fläche aus einem Ringschieber (16) gebildet ist, der sich in der zweiten Stellung des Ringschiebers vom Kernring (15) nach innen zum inneren Profildurchmesser (17) des Arbeitskreises ersterckt.

4. Retarder nach irgendeinem der Ansprüche 1 bis 3, dadurch gekennzeichnet, daß die Mittel zur Bewegung der ringförmigen Fläche (16) in ihre zweite Stellung als Folge einer auf eine oder mehrere Massen wirkenden Zentrifugalkraft arbeiten und daß die ringförmige Fläche gegen die Wirkung dieser Zentrifugalkraft oder Zentrifugalkräfte durch Flüssigkeit innerhalb des Arbeitskreises in ihre erste Stellung bewegbar ist, wenn diese Flüssigkeit in einer ausreichenden Menge vorhanden ist, um den Retarder mit in ihrer ersten Stellung befindlichen Fläche zu aktivieren.

5. Retarder nach Anspruch 4, dadurch gekennzeichnet, daß die Massen durch gewichtsbelastete Hebel (19) gebildet sind, deren Bewegung derart, daß ihre massiven Teile nach außen, weg von der Retarderachse gebracht werden, auf die ringförmige Fläche (16) im Sinne einer axialen Bewegung wirkt.

**Revendications**

1. Un ralentisseur hydrodynamnique comprenent au moins deux éléments à aubes (1, 4) définissant ensemble un circuit toroïdal de travail, un des éléments (1) étant empêché de tourner tandis qu'un autre élément ou l'autre élément (4) est accouplé à l'organe rotatif à ralentir pour tourner avec lui, le ralentisseur comprenant des moyens pour assurer sélectivement une alimentation en liquide du circuit de travail et une décharge de liquide du circuit de travail, et dans lequel une partie de la paroie du circuit de travail est formée par une surface (16) mobile entre une première position où elle fait partie du circuit de travail et une seconde position où elle dérive sensiblement tout l'écoulement de fluide passant dans le circuit de travail le long d'un trajet qui met l'écoulement de fluide effectivement hors de contact avec les aubes (5) d'un des éléments, caractérisé en ce que la surface (16) est annulaire, non divisée, axialement mobile et est radialement séparée des aubes (5) de l'élément associé, et le ralentissuer comprend des moyens (19) pour déplacer la surface annulaire axialement entre les première et seconde positions.

2. Un ralentisseur selon la revendication 1, caractérisé en ce que la surface annulaire (16) est placée radialement vers l'intérieur desdites aubes (5) de l'élément associé.

3. Un ralentisseur selon la revendication 1 ou 2, le ralentisseur comportant un anneau central (15), caractérisé en ce que la surface annulaire est formée par un obturateur annulaire (16) qui s'étend vers l'intérieur à partir de l'anneau central (15) jusqu'à la périphérie (17) du profil intérieur du circuit de travail dans la seconde position de l'obturateur.

4. Un ralentisseur selon l'une quelconque des revendications 1 à 3, caractérisé en ce que les moyens pour déplacer la surface annulaire (16) jusque dans sa seconde position, opèrent sous l'effet de forces centrifuges agissant sur une ou plusieurs masses et la surface annulaire est déplaçable jusque dans san première position, en opposition à l'effet de la ou lesdits forces centriguges, par du liquide se trouvant dans le circuit de travail quand ledit liquid est présent en quantité suffisante pour actionner le ralentisseur dont ladite surface de trouve dans sa première position.

5. Un ralentisseur selon la revendication 4, caractérisé en ce que les masses sont formées par des leviers massifs (19), dont les mouvements pour déplacer leurs parties massives vers l'extérieur en les éloignant de l'axe du ralentissuer, agissent sur la surface annulaire (16) pour la déplacer axialement.

0 074 857

FIG.1

FIG.2

FIG. 3

FIG. 4

FIG. 5